# FASCICULE DE BREVET EUROPEEN

(11) **EP 1 559 681 B1**
(45) Date de publication et mention de la délivrance du brevet: **16.12.2009**
(21) Numéro de dépôt: 05290087.5
(22) Date de dépôt: 13.01.2005
(51) Int. Cl.: C01B 33/38, C01B 33/44, B01J 29/04

(54) **Méthode de synthèse de solides lamellaires à partir d'un structurant organique de type amino-alcool**
Verfahren zur Herstellung von lamellaren Materialien mittels eines organischen Strukturbildners vom Typ Amino-Alkohol
Method for the synthesis of lamellar materials using an amino-alcohol type organic structuring agent

(30) Priorité: 29.01.2004 FR 0400842
(43) Date de publication de la demande: 03.08.2005
(73) Titulaire: Institut Français du Pétrole, 92852 Rueil-Malmaison Cedex (FR)
(72) Inventeur: Barea, Eva, 46520 Puerto Sagunto (ES); Fornes, Vincent, Valencia 46001 (ES); Corma, Avelino, 46022 Valencia (ES); Bourges, Patrick, 69003 Lyon (FR); Guillon, Emmanuelle, 69230 St Genis Laval (FR)

(56) Documents cités:
- WO-A-88/00091
- WO-A-91/12204
- US-A- 4 657 662
- US-A- 5 063 039
- US-A- 5 236 681

## Description

### Domaine de l'invention

L'invention concerne le domaine des procédés de préparation de solides lamellaires à base de silicate, ces derniers étant également connus sous le nom de solide lamellaire de type phyllosilicates ou silicates lamellaires. On entend par solides lamellaires à base de silicate un composé contenant des couches empilées de silicium (Si) en coordination tétraédrique (SiO4). D'autres éléments que le silicium Si peuvent être présents dans le solide également en position tétraédrique.

### Art antérieur

Parmi les silicates lamellaires, on peut citer la magadiite, natrosilite, kenyaite, makatite, nekoite, kanemite, okenite, dehayelite, macdonalite et rhodesite.

Ces solides existent souvent à l'état naturel avec une composition du type AₓSiyO_{z}, nH2O, A pouvant être, par exemple, un élément sodium ou potassium. De tel solides lamellaires sont, par exemple, Na₂Si₁₄O₂₉·9H2O pour la Magadiite et Na₂Si₂₀O₄₁·10H₂O pour la Kenyaite. De tels solides naturels présentent la même composition que les solides synthétiques. Ces solides présentent souvent une structure tridimensionelle, avec des interactions de type Van der Walls entre les feuillets ainsi qu'une faible surface spécifique.

Ces solides possèdent des propriétés d'absorption et d'échange qui sont intéressantes. Ces solides sont particulièrement adaptés pour l'adsorption d'eau ou de molécules organiques ainsi que pour l'échange cationique de surface. Récemment, les silicates lamellaires ont été largement étudiés pour leur capacité à devenir un solide acide par échange protonique. En outre, l'introduction de piliers dans les espaces interlamellaires permet de créer une mésoporosité et d'augmenter le surface spécifique.

Il est connu de WO 88/00091 de synthétiser un silicate lamellaire ponté à partir d'un silicate lamellaire constitué par de la magadiite de synthèse en utilisant un structurant organique choisi parmi le chlorure de benzyltriethylammonium, le chlorure de benzyltriméthylammonium, le chlorure de dibenzyldiméthylammonium, le N,N'-diméthylpiperazine, la triéthylamine, ou d'autres composés quaternaires ou des amines hétérocycle.

Il est également connu de WO 91/12204 de synthétiser un silicate cristallisé de type Kenyaite en utilisant un composé organique sélectionné parmi une alkylamine, une trialkylamine, un composé tétraalkylamonium et une diamine triméthylhexaméthylenediamine, ledit alkyl ayant de 1 à 12 atomes de carbone.

### Description sommaire de l'invention

L'invention porte sur un procédé de synthèse de solides lamellaires à base de silicates en utilisant un structurant organique comportant un groupement alcool et un groupement amine séparés par une chaîne hydrocarbonée.

Le procédé de préparation de l'invention est, par rapport à ceux présentées dans l'art antérieur, plus économique, plus efficace et permet la production de solides lamellaires de manière plus reproductible.

### Description détaillée de l'invention

La présente invention porte donc sur un procédé de synthèse de solides lamellaires à base de silicates comportant :
i) une étape de mélange, lors de laquelle on prépare un mélange comportant un métal alcalin M, une source de silice SiO₂, de l'eau, un structurant organique A et éventuellement un autre métal X à coordinence tétraédrique, et
ii) une étape de cristallisation lors de laquelle on maintient ce mélange dans des conditions permettant la formation d'un solide cristallin, dans laquelle le structurant organique comporte au moins un groupement alcool et au moins un groupement amine séparés par une chaîne hydrocarbonée.

Avantageusement, le structurant organique comporte un seul groupement alcool et un seul groupement amine.

De manière plus préférée, le groupement alcool est un groupement terminal du structurant organique. De la même façon, le groupement amine est préférentiellement un groupement terminal du structurant organique. De manière encore plus préférée, les deux groupements alcool et amine sont des groupements terminaux du structurant organique.

De préférence, le structurant organique comporte de 1 à 20 atomes de carbone.

La chaîne hydrocarbonée séparant les deux groupements amine et alcool peut comporter un groupement alkyl linéaire, cyclique ou aromatique, de préférence cyclique ou aromatique.

De préférence, le structurant organique est choisi dans le groupe formé par la tyramine, le 4-aminophénol, le trans-4-aminocyclohexanol et le 2-(4-amino-phényl)-éthanol.

Le procédé de synthèse comporte une étape de mélange, lors de laquelle on prépare un mélange comportant un métal alcalin, une source de silice, de l'eau et un structurant organique.

Le métal alcalin M incorporé dans l'étape de préparation du mélange peut être du lithium, du potassium, du sodium ou/et du calcium. De préférence, le métal alcalin est du sodium.

La source de silice incorporée dans l'étape de préparation du mélange peut être du silicate, du gel de silice, de la silice colloidale et/ou de l'acide silicique.

De préférence, lors de l'étape i) de mélange, on incorpore, en outre, un métal X à coordinence tétraédrique non silicique.

De manière plus préférée, le métal X est choisi dans le groupe formé par l'aluminium, le bore, le chrome, le fer, le gallium, l'indium, le nickel, le zirconium, le cobalt, le titane, le cuivre, le niobium et le europium.

De manière encore plus préférée, le métal X est de l'aluminium.

Le métal X peut être incorporé dans le mélange sous une forme oxydée XOn, ou sous toute autre forme, telle que, par exemple, Al₂O₃, Al(NO₃)₃, Co(CH₃COO)₂, Ti(EtO)₄, Ni(CH₃COO)₂, Zn(CH₃COO)₂, Cu(CH₃COO)₂, Cr(CH₃COO)₂, Eu(CH₃COO)₂, Zr(OH)₄, Na₂B₄O₇, Nb₂O₅.

La composition du mélange obtenue lors de l'étape i) peut être décrite comme suit :
SiO₂ : x M⁺OH⁻ : y H₂O : z A
- x étant compris entre 0 et 1, de préférence entre 0,1 et 0,6
- y étant supérieur à 10
- z étant compris entre 0,05 et 3, de préférence entre 0,2 et 1

Le procédé de synthèse selon l'invention comporte une étape de cristallisation lors de laquelle on maintient ce mélange dans des conditions permettant la formation d'un solide cristallin.

L'étape de cristallisation est généralement de type hydrothermale. Cette étape peut être réalisée selon toute méthode connue de l'homme de l'art, de préférence en autoclave. Le mélange réactionnel peut être vigoureusement agité ou pas pendant la durée de l'étape de cristallisation.

Avantageusement, lors de l'étape ii) de cristallisation, on chauffe le mélange obtenu lors de l'étape i) à une température de cristallisation comprise entre 100 et 200°C, de préférence entre 135 et 175°C, pendant une durée de cristallisation comprise entre 1 et 20 jours, de préférence entre 3 et 10 jours.

De préférence, le produit obtenu à l'étape ii) de cristallisation est soumis à au moins une des étapes suivantes :
iii) une étape de séparation du solide du mélange de cristallisation,
iv) une étape de lavage du solide, et
v) à une étape de séchage dudit solide.

Le solide cristallisé est généralement séparé du mélange par toute méthode connue de l'homme de l'art telle que la filtration. Le solide est ensuite lavé à l'eau, de préférence de l'eau dé-ionisée.

L'étape v) de séchage est généralement réalisée à une température comprise entre 50 et 150°C pendant une durée allant de 12 à 30 heures.

Le séchage est réalisé a pression atmosphérique de préférence mais peut être effectué sous pression.

Le procédé de synthèse selon l'invention permet, plus particulièrement, la production d'un solide lamellaire appartenant au groupe formé par la Kenyaite et la magadiite.

L'invention porte également sur un procédé de synthèse de solides lamellaires pontés à base de silicates comportant la synthèse d'un solide lamellaire, ledit solide obtenu étant ensuite ponté par intercalation d'un agent de pontage dans l'espace inter lamellaire dudit solide.

L'intercalation de l'agent de pontage peut être réalisée par toute technique connu de l'homme du métier.

L'insertion d'un agent de pontage entre les couches de silicate est réalisée de manière à ce que les piliers de l'agent pontant soient liés aux couches du solide lamellaire et la structure du solide lamellaire soit maintenue, la porosité du solide final s'en trouvant augmentée.

L'obtention d'un solide lamellaire ponté à partir d'un solide lamellaire peut être réalisée par les étapes suivantes :
- une étape d'insertion d'un agent gonflant cationique dans le solide lamellaire permettant d'augmenter l'espace inter lamellaire, de préférence effectuée par échange cationique,
- une étape d'insertion d'un agent de pontage dans le solide obtenu à l'étape précédente, l'agent de pontage étant de préférence choisi parmi les polyoxocations,
- une étape de lavage du solide obtenu à l'étape précédente, et
- une étape de calcination du solide lavé.

Les agents gonflants peuvent être des espèces chimiques organiques, organométalliques ou des complexes inorganiques, de préférence pourvues d'une forte charge positive.

Dans certains cas, l'étape de calcination permet de révéler la porosité du solide lamellaire ponté. Cette étape de calcination peut être avantageusement réalisée sous air, à une température comprise entre 300 et 800°C.

Après l'étape de séchage du solide lamellaire ou après l'étape de calcination du solide lamellaire ponté, on peut réaliser un échange cationique du métal alcalin ajouté à l'étape i) de mélange avec des ions hydrogène, ce qui confère de l'acidité au solide final.

### Exemple 1: synthèse de la Kenyaite silicique

Une solution comprenant 98 % en poids de Tyramine et de silice, connue sous le terme commercial © Ludox AS-40 commercialisée par Aldrich, est incorporée dans une solution basique de soude NaOH (98 % en poids) et d'eau.

Le mélange est agité vigoureusement pendant deux heures. Le mélange est ensuite transféré, après homogénéisation, dans une chemise de Téflon qui est ensuite placée dans une autoclave.

L'autoclave est chauffé pendant 6 jours à 150°C dans une étuve. Pendant la synthèse, l'autoclave est continuellement agité.

Le produit cristallisé obtenu est filtré, lavé à l'eau déionisée (pour atteindre un pH neutre) puis séché une nuit à 60°C.

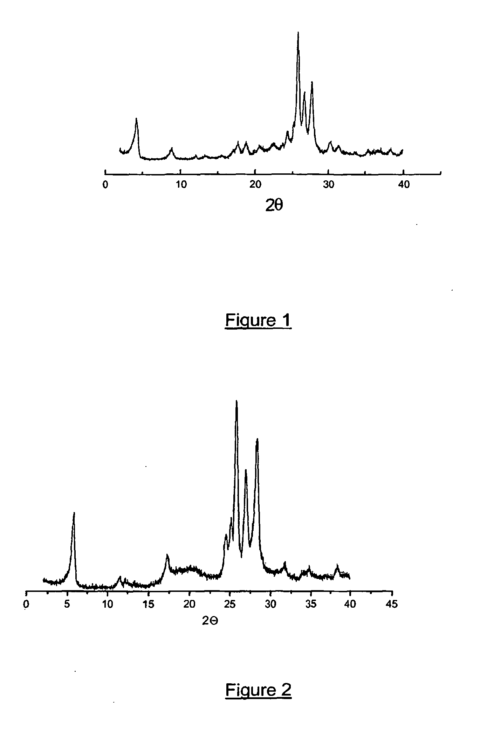

Le diffractogramme effectué sur l'échantillon brut de synthèse est présenté à la Figure 1.

### Exemple 2: synthèse de la Magadiite silicique

Une solution comprenant 97 % en poids de Trans-4-aminocyclohexanol et de silice (© Ludox AS-40 commercialisée par Aldrich) est incorporée dans une solution basique de soude NaOH (98 % en poids) et d'eau.

Le mélange est agité vigoureusement pendant deux heures. Le mélange est ensuite transféré, après homogénéisation, dans une chemise de Téflon qui est ensuite placée dans un autoclave.

L'autoclave est chauffé pendant 3 jours à 150°C dans une étuve. Pendant la synthèse, l'autoclave est continuellement agité. Le produit cristallisé obtenu est filtré, lavé à l'eau déionisée (pour atteindre un pH neutre) puis séché une nuit à 60°C.

Le diffractogramme effectué sur l'échantillon brut de synthèse est présenté à la Figure 2.

### Exemple 3 : Kenyaite substituée avec un métal M

Une solution comprenant 98 % en poids de Tyramine et de silice (© Ludox AS-40 commercialisé par Aldrich) est incorporée dans une solution basique de soude NaOH (98% en poids) et d'eau.

Le mélange est agité vigoureusement pendant 15 minutes. Une solution aqueuse contenant le cation M est ajoutée au mélange de manière à obtenir les compositions telles que décrites dans le Tableau 1 ci-dessous.

**Tableau 1**

| Echantillon | Composition molaire du mélange | Durée de synthèse (en jours) |
|---|---|---|
| Co - Kenyaite | SiO2:0,2NaOH:0,50Tyramine:15H2O: 1/30-1/100 Co(CH3COO)2 | 10 |
| Ti - Kenyaite | SiO2:0,2NaOH:0,50Tyramine:15H2O: 1/50-1/100 Ti(EtO)4 | 9 |
| Ni - Kenyaite | SiO2:0,2NaOH:0,50Tyramine:15H2O: 1/50-1/100 Ni(CH3COO)2 | 10 |
| Zn - Kenyaite | SiO2:0,2NaOH:0,50Tyramine:15H2O: 1/50-1/100 Zn(CH3COO)2 | 10 |
| Cu - Kenyaite | SiO2:0,2NaOH:0,50Tyramine:15H2O: 1/30-1/100Cu(CH3COO)2 | 10 |
| Nb - Kenyaite | SiO2:0,2NaOH:0,50Tyramine:15H2O: 1/50-1/100 Nb205 | 7 |
| B - Kenyaite | SiO2:0,2NaOH:0,50Tyramine:15H2O: 1/50-1/100 Na2B4O7 | 7 |
| Zr - Kenyaite | SiO2:0,2NaOH:0,50Tyramine:15H2O: 1/50-1/100 Zr(OH)4 | 7 |
| Cr - Kenyaite | SiO2:0,2NaOH:0,50Tyramine:15H2O: 1/50-1/100 Cr(CH3COO)2 | 10 |
| Cr/Co - Kenyaite | SiO2:0,2NaOH:0,50Tyramine:15H2O: 1 /100( Cr + Co) | 10 |
| Eu - Kenyaite | SiO2:0,2NaOH:0,50Tyramine:15H2O: 1/50-1/100 Eu(CH3COO)3 | 7 |

Les mélanges sont ensuite transférés, après homogénéisation, dans une chemise de Téflon qui est ensuite placée dans un autoclave. L'autoclave est chauffé pendant plusieurs jours à 150°C dans une étuve. Pendant la synthèse, l'autoclave est continuellement agité. Le produit cristallisé obtenu est ensuite filtré, lavé à l'eau déionisée (pour atteindre un pH neutre) puis séché une nuit à 60°C.

### Exemple 4: Magadiite substituée avec un métal M

Une solution comprenant 97 % en poids de Trans-4-aminocyclohexanol et de la silice (© Ludox AS-40 commercialisée par Aldrich) est incorporée dans une solution basique de soude NaOH (98 % en poids), d'eau et du cation selon les compositions molaires décrites dans le tableau 2 ci-dessous.

**Tableau 2**

| Echantillon | Composition molaire du mélange | Durée de synthèse (en jours) |
|---|---|---|
| Al - Magadiite | SiO2:0,2NaOH:0,50Trans-4-aminocyclohexanol:15H2O:1/100 Al2O3 | 3 |
| Co - Magadiite | SiO2:0,2NaOH:0,50Trans-4-aminocyclohexanol:15H2O:1/100 -1/50 Co(CH3COO)2 | 3 |
| Cu - Magadiite | SiO2:0,2NaOH:0,50Trans-4-aminocyclohexanol:15H2O:1/100 - 1/50 Cu(CH3COO)2 | 3 |
| Ti - Magadiite | SiO2:0,2NaOH:0,50Trans-4-aminocyclohexanol:15H2O:1/100 - 1/50 Ti(EtO)4 | 3 |
| Ni - Magadiite | SiO2:0,2NaOH:0,50Trans-4-aminocyclohexanol:15H2O:1/100 -1/50 Ni(CH3COO)2 | 3 |
| Eu - Magadiite | SiO2:0,2NaOH:0,50Trans-4-aminocyclohexanol:15H2O:1/100 - 1/50 Eu(CH3COO)3 | 3 |
| Zr - Magadiite | SiO2:0,2NaOH:0,50Trans-4-aminocyclohexanol:15H2O:1/100 - 1/50 Zr(OH)4 | 3 |
| Cr - Magadiite | SiO2:0,2NaOH:0,50Trans-4-aminocyclohexanol:15H2O:1/100 -1/50 Cr(CH3COO)3 | 3 |
| Cr/Co - Magadiite | SiO2:0,2NaOH:0,50Trans-4-aminocyclohexanol:15H2O:1/100 (CO+Cr) | 3 |

Le mélange est agité vigoureusement pendant cinq heures. Le mélange est ensuite transféré, après homogénéisation, dans une chemise de Téflon qui est ensuite placée dans un autoclave.

L'autoclave est chauffé pendant 3 jours à 150°C dans une étuve. Pendant la synthèse, l'autoclave est continuellement agité. Le produit cristallisé obtenu est filtré, lavé à l'eau déionisée (pour atteindre un pH neutre) puis séché une nuit à 60°C.

## Revendications

1. Procédé de synthèse de solides lamellaires à base de silicates comportant :
i) une étape de mélange, lors de laquelle on prépare un mélange comportant un métal alcalin, une source de silice, de l'eau et un structurant organique, et
ii) une étape de cristallisation lors de laquelle on maintient ce mélange dans des conditions permettant la formation d'un solide cristallin,
**caractérisé en ce que** le structurant organique comporte au moins un groupement alcool et au moins un groupement amine séparés par une chaîne hydrocarbonée.

2. Procédé de synthèse selon la revendication 1, dans lequel le groupement alcool est un groupement terminal du structurant organique.

3. Procédé de synthèse selon l'une des revendications 1 à 2, dans lequel le groupement amine est un groupement terminal du structurant organique.

4. Procédé de synthèse selon l'une des revendications 1 à 3, dans lequel le structurant organique comporte de 1 à 20 atomes de carbone.

5. Procédé de synthèse selon l'une des revendications 1 à 4, dans lequel le structurant organique est choisi dans le groupe formé par la tyramine, le 4-aminophénol, le trans-4-aminocyclohexanol et le 2-(4-amino-phényl)-éthanol.

6. Procédé de synthèse selon l'une des revendications 1 à 5, dans lequel lors de l'étape i) de mélange, on incorpore, en outre, un métal X à coordinence tétraédrique non silicique.

7. Procédé selon la revendication 6, dans lequel le métal X est choisi dans le groupe formé par l'aluminium, le bore, le chrome, le fer, le gallium, l'indium, le nickel, le zirconium, le cobalt, le titane, le cuivre, le niobium et le europium.

8. Procédé de synthèse selon l'une des revendications 1 à 7, dans lequel lors de l'étape ii) de cristallisation, on chauffe le mélange obtenu lors de l'étape i) à une température de cristallisation comprise entre 100 et 200°C pendant une durée de cristallisation comprise entre 1 et 20 jours.

9. Procédé de synthèse selon l'une des revendications 1 à 8, dans lequel le produit obtenu à l'étape ii) de cristallisation est soumis:
iii) à une étape de séparation du solide du mélange de cristallisation,
iv) le solide ainsi obtenu est soumis à une étape de lavage, et
v) à une étape de séchage.

10. Procédé de synthèse selon la revendication 9, dans lequel l'étape v) de séchage est réalisée à une température comprise entre 50 et 150°C pendant une durée allant de 12 à 30 heures.

11. Procédé de synthèse selon l'une des revendications 1 à 10, dans lequel le solide lamellaire fabriqué appartient au groupe formé par la Kenyaite et la magadiite.

12. Procédé de synthèse de solides lamellaires pontés à base de silicates comportant la synthèse d'un solide lamellaire selon le procédé de l'une des revendications 1 à 11, ledit solide obtenu étant ensuite ponté par intercalation d'un agent de pontage dans l'espace inter lamellaire dudit solide.

## Claims

1. Process for synthesis of silicate-based lamellar solids comprising:
i) a stage for mixing, during which a mixture that comprises an alkaline metal, a silica source, water and an organic structuring agent is prepared, and
ii) a stage for crystallization during which this mixture is kept under conditions that allow the formation of a crystalline solid,
**characterized in that** the organic structuring agent comprises at least one alcohol group and at least one amine group that are separated by a hydrocarbon chain.

2. Process for synthesis according to claim 1, wherein the alcohol group is a terminal group of the organic structuring agent.

3. Process for synthesis according to one of claims 1 to 2, wherein the amine group is a terminal group of the organic structuring agent.

4. Process for synthesis according to one of claims 1 to 3, wherein the organic structuring agent comprises 1 to 20 carbon atoms.

5. Process for synthesis according to one of claims 1 to 4, wherein the organic structuring agent is selected from the group that is formed by tyramine, 4-aminophenol, trans-4-aminocyclohexanol and 2-(4-amino-phenyl)-ethanol.

6. Process for synthesis according to one of claims 1 to 5, wherein during mixing stage i), in addition, a metal X with non-silicic tetrahedral coordinance is incorporated.

7. Process according to claim 6, wherein the metal X is selected from the group that is formed by aluminum, boron, chromium, iron, gallium, indium, nickel, zirconium, cobalt, titanium, copper, niobium and europium.

8. Process for synthesis according to one of claims I to 7, wherein during crystallization stage ii), the mixture that is obtained during stage i) is heated to a crystallization temperature of between 100 and 200°C for a crystallization period of between 1 and 20 days.

9. Process for synthesis according to one of claims 1 to 8, wherein the product that is obtained in crystallization stage ii) is subjected
iii) to a stage for separation of the solid from the crystallization mixture,
iv) the thus obtained solid is subjected to a washing stage, and
v) to a drying stage.

10. Process for synthesis according to claim 9, wherein drying stage v) is carried out at a temperature of between 50 and 150°C for a period of 12 to 30 hours.

11. Process for synthesis according to one of claims 1 to 10, wherein the lamellar solid that is produced belongs to the group that is formed by Kenyaite and magadiite.

12. Process for synthesis of bridged silicate-based lamellar solids comprising the synthesis of a lamellar solid according to the process of one of claims 1 to 11, whereby said solid that is obtained is then bridged by intercalation of a bridging agent in the interlamellar space of said solid.

## Patentansprüche

1. Verfahren zur Synthese von lamellaren Feststoffen auf der Basis von Silicaten, umfassend:
i) einen Mischungsschritt, bei dem eine Mischung hergestellt wird, die ein Alkalimetall, eine Siliciumdioxidquelle, Wasser und ein organisches Strukturierungsmittel umfasst, und
ii) einen Kristallisationsschritt, beim dem diese Mischung unter Bedingungen gehalten wird, die die Bildung eines kristallinen Feststoffs ermöglichen,
**dadurch gekennzeichnet, dass** das organische Strukturierungsmittel mindestens eine Alkoholgruppe und mindestens eine Amingruppe umfasst, die durch eine Kohlenwasserstoffkette getrennt sind.

2. Verfahren zur Synthese nach Anspruch 1, wobei die Alkoholgruppe eine Endgruppe des organischen Strukturierungsmittels ist.

3. Verfahren zur Synthese nach einem der Ansprüche 1 bis 2, wobei die Amingruppe eine Endgruppe des organischen Strukturierungsmittels ist.

4. Verfahren zur Synthese nach einem der Ansprüche 1 bis 3, wobei das organische Strukturierungsmittel 1 bis 20 Kohlenstoffatome umfasst.

5. Verfahren zur Synthese nach einem der Ansprüche 1 bis 4, wobei das organische Strukturierungsmittel aus der Gruppe gebildet aus Tyramin, 4-Aminophenol, Trans-4-aminocyclohexanol und 2-(4-Aminophenyl)-ethanol ausgewählt ist.

6. Verfahren zur Synthese nach einem der Ansprüche 1 bis 5, wobei während des Mischungsschritts i) ferner ein Metall X mit nicht-silizischer tetraedrischer Koordination integriert wird.

7. Verfahren nach Anspruch 6, wobei das Metall X aus der Gruppe gebildet aus Aluminium, Bor, Chrom, Eisen, Gallium, Indium, Nickel, Zirconium, Cobalt, Titan, Kupfer, Niob und Europium ausgewählt ist.

8. Verfahren zur Synthese nach einem der Ansprüche 1 bis 7, wobei während des Kristallisationsschritts ii) die Mischung, die während des Schritts i) erhalten wurde, auf eine Kristallisationstemperatur im Bereich zwischen 100 und 200 °C für eine Kristallisationsdauer im Bereich zwischen 1 und 20 Tagen erhitzt wird.

9. Verfahren zur Synthese nach einem der Ansprüche 1 bis 8, wobei das in Schritt ii) erhaltene Kristallisationsprodukt Folgendem unterzogen wird:
iii) einem Schritt der Trennung des Feststoffs von der Kristallisationsmischung,
iv) wobei der so erhaltene Feststoff einem Waschschritt und
v) einem Trocknungsschritt unterzogen wird.

10. Verfahren zur Synthese nach Anspruch 9, wobei der Trocknungsschritt v) bei einer Temperatur im Bereich zwischen 50 und 150 °C für eine Dauer, die von 12 bis 30 Stunden reicht, ausgeführt wird.

11. Verfahren zur Synthese nach einem der Ansprüche 1 bis 10, wobei der gefertigte lamellare Feststoff zur Gruppe gehört, die aus Kenyaite und Magadiit gebildet ist.

12. Verfahren zur Synthese von lamellaren Feststoffen, die basierend auf Silicaten überbrückt sind, das die Synthese eines lamellaren Feststoffs gemäß dem Verfahren nach einem der Ansprüche 1 bis 11 umfasst, wobei der erhaltene Feststoff anschließend durch Interkalation eines Überbrückungsmittels im interlamellaren Raum des Feststoffs überbrückt wird.
